# EUROPÄISCHE PATENTSCHRIFT

(11) **EP 1 725 766 B1**
(45) Veröffentlichungstag und Bekanntmachung des Hinweises auf die Patenterteilung: **17.09.2008**
(21) Anmeldenummer: 04739103.2
(22) Anmeldetag: 23.04.2004
(51) Int. Cl.: F03B 3/10, F16D 23/10

(54) **MASCHINENSATZ EINER SPEICHERKRAFTANLAGE**
GENERATING SET FOR AN ENERGY STORAGE PLANT
GROUPE GENERATEUR POUR CENTRALE A ACCUMULATION

(30) Priorität: 05.03.2004 AT 1642004 U
(43) Veröffentlichungstag der Anmeldung: 29.11.2006
(73) Patentinhaber: VA TECH HYDRO GmbH, 1141 Wien (AT)
(72) Erfinder: FEYRER, Robert, 88271 Wilhelmsdorf (DE); NOWICKI, Peter, 88250 Weingarten (DE); KUHN, Klaus, 88214 Ravensburg (DE)
(74) Vertreter: Schweinzer, Friedrich
(86) Internationale Anmeldenummer: PCT/EP2004/004334
(87) Internationale Veröffentlichungsnummer: WO 2005/093248

(56) Entgegenhaltungen:
- DE-C- 614 935
- US-A- 3 943 374
- STOLZLE K ET AL: "SYNCHRONISIERENDE, SELBSTSCHALTENDE KUPPLUNGEN FUR EIN-WELLEN- COGENERATION-KRAFTWERKE" ANTRIEBSTECHNIK, KRAUSSKOPF VERLAG FUR WIRTSCHAFT GMBH. MAINZ, DE, Bd. 34, Nr. 8, 1. August 1995 (1995-08-01), Seiten 46-49, XP000517052 ISSN: 0722-8546

## Beschreibung

Die gegenständliche Erfindung betrifft einen Maschinensatz einer Speicherkraftanlage bestehend aus mehreren durch schaltbare, mechanische Kupplungen miteinander verbundener Wellen, wobei eine Welle die Welle einer elektrischen Rotationsmaschine, vorzugsweise ein Motor bzw. Generator, ist, an einer zweiten Welle eine Kraftmaschine, vorzugsweise eine Turbine, und an einer dritten Welle eine Arbeitsmaschine, vorzugsweise eine Pumpe oder Pump-Turbine, angeordnet ist.

Maschinensätze eines Speicherkraftwerks bestehen in der Regel aus einer elektrischen Maschine, die entweder als Motor oder Generator betrieben wird, die mit einer Turbine oder einer Pumpe verbunden ist.
Solche Anlagen sind z.B. aus der DE 21 48 682 oder der DE 24 38 034 bekannt. Bei diesen Anlagen ist der Generator/Motor zwischen einer Turbine und einer Pumpe angeordnet und die Generator/Motorwelle ist jeweils durch eine mechanische, schaltbare Kupplung mit der Welle der Turbine bzw. der Pumpe verbunden. Bei diesen Anlagen muss aber beim Umschalten vom Pumpen auf Turbinieren bzw. umgekehrt, der Generator/Motor vom Netz genommen werden, also vollkommen abgebremst und wieder beschleunigt werden, weshalb ein Umschaltvorgang relativ lange dauert.
Andere bekannte Anordnungen eines solchen Maschinensatzes verwenden einen hydraulischen Drehmomentenwandler oder einen Synchronisierwandler zur Umschaltung zwischen den einzelnen Betriebsarten. Dabei kann der Generator/Motor zwar am Netz bleiben und sich weiter mit Synchrondrehzahl drehen, solche hydraulischen Wandler haben allerdings einige gravierende Nachteile. Sie sind teuer und benötigen einen relativ großen Bauraum, vor allem radial, sie benötigen Zu- und Ableitungen für die Wasserversorgung des Wandlers und müssen in bestimmten Betriebszuständen gekühlt werden. Außerdem treten in solchen hydraulischen Wandlern im entleerten Zustand Ventilationsverluste auf und benötigen häufige Wartungsarbeiten und weisen hohe Betriebskosten auf. Darüber hinaus treten bei solchen hydraulischen Wandlern, vor allem beim Befüllen des Wandlers, Geräuschbelastungen von 100dB Schalldruckpegel und mehr auf.

Die vorliegende Erfindung hat sich daher die Aufgabe gestellt, einen Maschinensatz einer Speicherkraftanlage anzugeben, der Schaltvorgänge zwischen den einzelnen Betriebsarten ermöglicht ohne die elektrische Maschine vom Netz nehmen zu müssen, der geringe Investitions- und Betriebskosten erfordert, der eine einfache Montage und Steuerung möglich macht, der einen geringen Bauraum, insbesondere radial, einnimmt und der im Betrieb geräuscharm ist.

Diese Aufgabe wird erfindungsgemäß dadurch gelöst, dass an einem Ende der Welle einer elektrischen Rotationsmaschine ein erster Teil einer ersten schaltbaren, mechanischen Kupplung angeordnet ist, an einem Ende einer Welle der Arbeitsmaschine ein erster Teil einer zweiten schaltbaren, mechanischen Kupplung angeordnet ist und dass zwischen der Welle der elektrischen Rotationsmaschine und der Welle der Arbeitsmaschine als Synchronisierwelle die Welle der Kraftmaschine angeordnet ist, wobei an jedem Ende dieser Synchronisierwelle je ein zweiter Teil einer schaltbaren, mechanischen Kupplung angeordnet ist. Durch die Anordnung der Synchronisierwelle mit Turbine zwischen der elektrischen Maschine und der Pumpe, wobei zwischen Pumpe und Turbine, sowie zwischen Turbine und Generator/Motor jeweils eine mechanische, schaltbare Kupplung angeordnet ist, ist es möglich die Synchronisierwelle durch die Turbine sowohl zur Synchronisation der Pumpe mit der elektrischen Maschine, zur Synchronisation der Turbine mit der elektrischen Maschine, als auch im normalen Turbinenbetrieb zu nutzen.
Durch die erfindungsgemäße Anordnung der Synchronisierwelle können standardmäßig verfügbare, kostengünstige mechanische, schaltbare Kupplungen verwendet werden und es kann auf einen hydraulischen Drehmomentenwandler verzichtet werden. Weiters ermöglicht die erfindungsgemäße Anordnung der Synchronisierwelle Umschaltvorgänge zwischen den einzelnen Betriebsarten, ohne die elektrische Maschine vom Netz nehmen zu müssen. Mechanische Kupplungen weisen dabei verglichen zu hydraulischen Wandlern eine geringe Baugröße auf, erfordern geringe Wartungsaufwände und Betriebskosten, lassen sich einfach ansteuern und sind im Betrieb sehr geräuscharm.

Weitere Vorteile besonderer Ausführungsformen der Erfindung ergeben sich aus den Unteransprüchen.

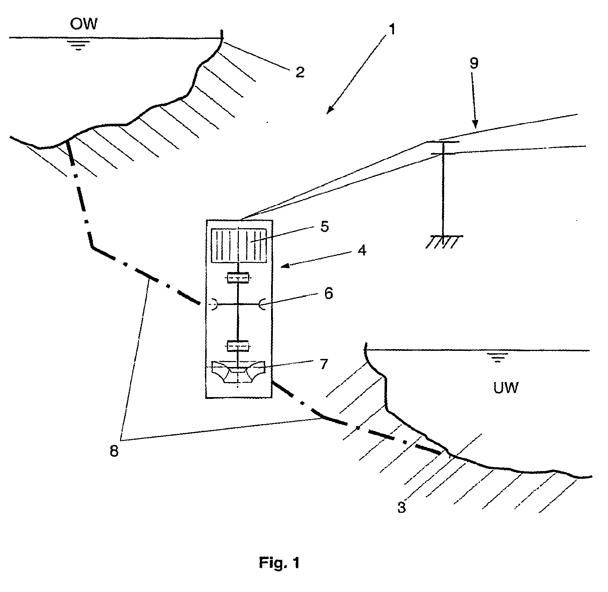

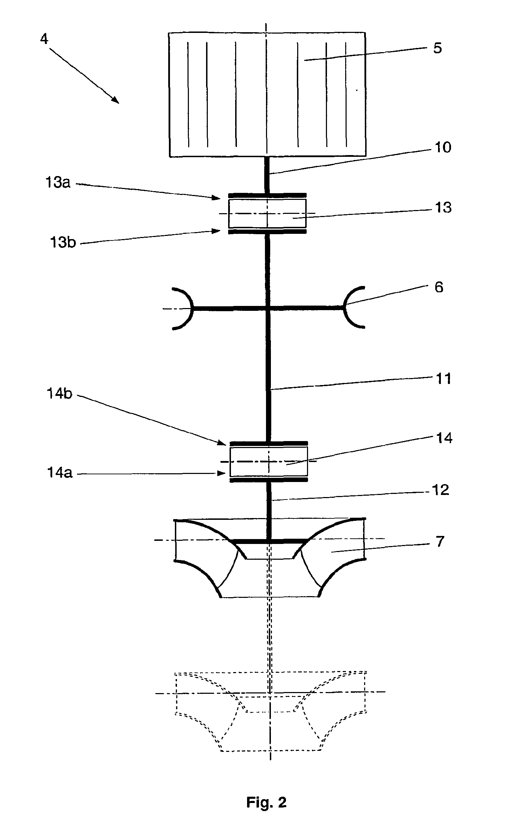

Die Erfindung wird im Nachfolgenden anhand der Figuren 1 und 2 beispielhaft und nicht einschränkend beschrieben, dabei zeigt
Fig. 1 eine schematische Darstellung einer Speicherkraftanlage und
Fig.2 eine schematische Darstellung eines erfindungsgemäßen Maschinensatzes.

Die in Fig. 1 dargestellte Speicherkraftanlage 1 besteht im Wesentlichen aus einem oberen Wasserreservoir 2 und einem unteren Wasserreservoir 3, zwischen denen der Maschinensatz 4 angeordnet ist. Zur Energieerzeugung wird Wasser aus dem oberen Wasserreservoir 2 über eine Turbine 6 des Maschinensatzes 4, die einen mit einem elektrischen Versorgungsnetz 9 verbundenen Generator 5 antreibt, in ein unteres Wasserreservoir 3 geleitet. In Zeiten in denen weniger Strombedarf besteht, z.B. nachts, wird Wasser aus dem unteren Wasserreservoir 3 durch eine Pumpe 7, die nun von dem Generator 5 in Motorbetrieb angetrieben wird, in das oberer Wasserreservoir 2 gepumpt. Eine solche Speicherkraftanlage 1 und die Möglichkeiten zur Verrohrung 8, also Zu- und Ableitungen, einer Speicherkraftanlage 1 sind hinlänglich bekannt und es wird daher nicht näher darauf eingegangen.
Die Turbine 6 kann dabei eine beliebige Turbine z.B. vom Pelton oder Francis-Typ, sein. Auch die Pumpe 7 kann eine beliebige ein- oder mehrstufige geeignete Pumpe sein. Ebenso könnte die Pumpe 7 auch als Pump-Turbine ausgeführt sein, die hier jedoch nur als Pumpe genutzt wird.
Fig. 2 zeigt nun einen erfindungsgemäßen Maschinensatz 4 einer Speicherkraftanlage 1 bestehend aus einem elektrischen Generator/Motor 5 (elektrische Rotationsmaschine), einer Turbine 6 (Kraftmaschine) und einer Pumpe 7 (Arbeitsmaschine), angedeutet auch eine mehrstufige Pumpe.
An einem Ende der Generator-/Motorwelle 10 ist ein erster Teil 13a einer ersten schaltbaren, mechanischen Kupplung 13 angeordnet. An einem Ende der Pumpenwelle 12 ist das Pumpenlaufrad bzw. das Pump-Turbinenlaufrad angeordnet und am anderen Ende ein erster Teil 14a einer zweiten schaltbaren, mechanischen Kupplung 14 angeordnet. Die Turbine 6 ist drehfest auf einer Synchronisierwelle 11 angeordnet, die zwischen der Generator-/Motorwelle 10 und der Pumpenwelle 12 angeordnet ist und an deren einen Ende ein zweiter Teil 13b der ersten Kupplung 13 und am zweiten Ende ein zweiter Teil 14b der zweiten Kupplung 14 angeordnet ist. Die einzelnen Teile 13a, 13b und 14a, 14b bilden jeweils eine Kupplung 13 und 14. Der Wellenstrang des Maschinensatzes 4 wird also gebildet durch Generator/Motorwelle 10 - Synchronisierwelle 11 - Pumpenwelle 12, die jeweils durch eine schaltbare, mechanische Kupplung 13, 14 verbunden sind. Als Kupplungen 13, 14 kommen z.B. in Frage Zahnkupplungen, Reibkupplungen (z.B. Lamellenkupplungen) oder auch selbst synchronisierende und selbstschaltende Kupplungen, auch Überholkupplungen genannt. Die Schaltvorgänge können dabei durch hinlänglich bekannte Schalteinrichtungen vorgenommen werden, die Kupplungen könnten aber auch selbstschaltend ausgeführt sein, wobei der Schaltvorgang z.B. durch ein Differenzdrehmoment an den beiden Wellen ausgelöst wird, wie z.B. im Falle einer Überholkupplung. Dieses Differenzdrehmoment könnte z.B. wie oben beschrieben über die Turbine 6 eingestellt werden.

Durch die Turbine 6 kann die Synchronisierwelle 11 durch hinlänglich bekannte Mittel, wie z.B. Leitschaufeln bei Francisturbinen oder Nadeldüsen bei Peltonturbinen, auf eine beliebige Drehzahl und unter Last auch auf ein beliebiges Drehmoment eingestellt werden. Die Drehzahl wird dabei je nach Bedarf zwischen Null und einer vom Generator/Motor 5 vorgegebenen Drehzahl, z.B. der Synchrondrehzahl der elektrischen Maschine 5 in Abhängigkeit vom mit dem Generator/Motor 5 verbundenen elektrischen Versorgungsnetz 9, eingestellt. Das Drehmoment kann ebenfalls beliebig zwischen einem minimalen Drehmoment, vorzugsweise Null aber auch darunter (also ein Bremsmoment), und einem maximalen Drehmoment, vorzugsweise dem Nennmoment des Generators/Motors 1, das sich aus der Nennleistung bei Nenndrehzahl ergibt, eingestellt werden. Um ein Bremsmoment zu erzeugen kann auch eine zusätzliche Bremseinrichtung an der Synchronisierwelle 11, z.B. eine Scheibenbremse, oder an der Turbine 6 selbst, z.B. eine Bremsdüse, vorgesehen werden. Zur Erzeugung eines Drehmoments muss aber natürlich an der Synchronisierwelle 11 eine Last, z.B. die Pumpe 7, anliegen. Im Falle dass sich die Synchronisierwelle 11 frei dreht, also beide Kupplungen 13, 14 ausgekuppelt sind, wäre das Drehmoment an der Synchronisierwelle 11 Null und es kann nur eine Drehzahl eingestellt werden.

Durch diese Synchronisierwelle 11 ist es nun möglich, zwischen allen Betriebsarten des Maschinensatzes 4 (Generator/Motor 5, Turbine 6 und Pumpe 7) einer Speicherkraftanlage 1 umzuschalten, ohne dass der Generator/Motor 5 seine Drehzahl ändert. D.h., die Umschaltungen zwischen den verschiedenen Betriebsarten können durchgeführt werden, während sich der Generator/Motor 5 am elektrischen Versorgungsnetz 9 befindet oder sich mit Synchrondrehzahl dreht. Dies bedingt natürlich, dass sich die Drehrichtung des Generators/Motors 5 in den unterschiedlichen Betriebsarten nicht ändert. Als mögliche Betriebsarten kommen z.B. in Frage Turbinieren, Pumpen, Phasenschieben, hydraulischer Kurzschluss oder Pumpentakten, die im Nachfolgenden beispielhaft beschrieben werden:

### Turbinieren, Pumpen:

Beim Umschalten von Turbinieren auf Pumpen wird die Kupplung 13 zwischen Generator/Motor 5 und Turbine 6 ausgekuppelt und der Generator/Motor 5 von Generator- auf Motorbetrieb umgestellt, ohne den Generator/Motor 5 vom Netz 9 nehmen zu müssen. Die Turbine 6 wird auf Null oder gegebenenfalls auf die selbe Drehzahl mit der die Pumpe 7 läuft verzögert, wodurch die Kupplung 14 zwischen Turbine 6 und Pumpe 7 eingekuppelt werden kann oder selbsttätig einkuppelt. Die Turbine 6 wird nun wieder angefahren und die Pumpe 7 durch die Turbine 6 auf die Drehzahl des Generators/Motors 5, vorzugsweise die Synchrondrehzahl, beschleunigt. Nach Erreichen dieser Drehzahl, und gegebenenfalls nach dem Einstellen eines bestimmten Drehmoments, kann die Kupplung 13 zwischen Generator/Motor 5 und Turbine 6 eingekuppelt werden bzw. kuppelt selbsttätig ein, wodurch die Pumpe 7 nun vom Motor 5 angetrieben wird. Damit kann die Druckwasserversorgung der Turbine 6 eingestellt werden und es wird Wasser vom unteren Wasserreservoir 3 zum oberen Wasserreservoir 2 gepumpt.
Beim Umschalten von Pumpen auf Turbinieren könnte die Kupplung 14 zwischen Turbine 6 und Pumpe 7 ausgekuppelt werden und damit die Pumpe 7 vom restlichen Wellenstrang abgekuppelt werden. Oder es könnte die Kupplung 13 zwischen Generator/Motor 5 und Turbine 6 zuerst ausgekuppelt werden, die Turbine 6 und Pumpe 7 auf Drehzahl Null verzögert werden, die Kupplung 14 zwischen Turbine 6 und Pumpe 7 während der Verzögerung bzw. bei Drehzahl Null ausgekuppelt und anschließend die Turbine 6 wieder auf die Synchrondrehzahl der elektrischen Maschine 5 gebracht werden, womit die Turbine 6 wieder mit der elektrischen Maschine 5 verbunden werden könnte, die dazu gleichzeitig wieder auf Generatorbetrieb umgeschaltet wird.
Es könnte aber auch zuerst die Wasserzuführung zur Turbine 6 geöffnet werden, sodass die Turbine 6 die Pumpe 7 treibt und der Motor 5 dem Netz 9 keine Leistung entnimmt. Anschließend könnte die Kupplung 14 zwischen Turbine 6 und Pumpe 7 ausgekuppelt werden und die elektrische Maschine 5 auf Generatorbetrieb umgeschaltet werden. Das gleichzeitige Betreiben von Pumpe 7 und Turbine 6 wird auch als hydraulischer Kurzschluss bezeichnet und wird weiter unten noch genauer beschrieben.

### Phasenschieben:

Bei dieser Betriebsart läuft der Generator/Motor 5 frei, die Kupplung 13 zwischen Generator/Motor 5 und Turbine 6 ist also ausgekuppelt. Dieser Betrieb wird bekannter Weise zum Beeinflussen der Phasenlage des elektrischen Versorgungsnetzes 9 verwendet. Soll daraufhin auf die Betriebsart Pumpen oder Turbinieren umgeschaltet werden, so wird wie oben beschrieben die Synchronisierwelle 11, gegebenenfalls gemeinsam mit der Pumpenwelle 12, zuerst auf die Drehzahl der elektrischen Maschine 5, und gegebenenfalls auch auf ein bestimmtes Drehmoment zum Kuppeln, gebracht und anschließend die Kupplung 13 zwischen Generator/Motor 5 wieder eingekuppelt.

### Hydraulischer Kurzschluss:

Grundsätzlich ist auch ein Betrieb möglich bei dem sowohl die Pumpe 7 als auch die Turbine 6 in Betrieb ist, ein solcher Betrieb wird als hydraulischer Kurzschluss bezeichnet. Diese Betriebsart kann genutzt werden, um die Leistungsaufnahme der als Motor betriebenen elektrischen Maschine 5 zu steuern und/oder um den Volumenstrom der Pumpe 7 zu steuern.
Im Pumpmodus treibt der Motor 5 die Pumpe 7 und entnimmt dem elektrischen Versorgungsnetz 9 dafür elektrische Leistung. Man kann aber nun auch die Turbine 6 mit Druckwasser beaufschlagen, sodass zum Teil die Turbine 6 die Pumpe 7 antreibt und dadurch die Leistungsaufnahme des Motors 5 sinkt. Im Idealfall wird dabei ein Nullpunkt eingestellt, in dem die Pumpe 7 vollständig durch die Turbine 6 angetrieben wird und die Leistungsaufnahme des Motors 5 gleich Null ist. Dabei wird aber natürlich weniger Wasser ins obere Wasserreservoir befördert, da gleichzeitig die Turbine 6 betrieben wird.
Der Volumenstrom der Pumpe 7 ergibt sich im Wesentlichen aus den Wasserständen OW, UW des oberen und unteren Wasserreservoirs 2, 3, da die Drehzahl der Pumpe 7 durch die Synchrondrehzahl der elektrischen Maschine 5 vorgegeben ist. Um den Volumenstrom zu regeln könnte man im Pumpmodus parallel die Turbine 6 betreiben, um so den Volumenstrom ins obere Wasserreservoir 2 gezielt zu beeinflussen.

### Pumpentakten:

In der Regel wird in Zeiten geringen Strombedarfs, hauptsächlich nachts, gepumpt und bei Bedarfsspitzen, hauptsächlich tagsüber, turbiniert. Durch die Liberalisierung des Strommarktes und Stromhandels können häufigere Schaltvorgänge gefordert sein. Dabei wird der Maschinensatz 4 abwechselnd einige Minuten im Pumpmodus und einige Minuten im Turbinenmodus betrieben. Dieses rasche Umschalten wird als Pumpentakten bezeichnet und erfordert die Möglichkeit des raschen Umschaltens zwischen Pumpen und Turbinieren, wie oben beschrieben.

Beim Anfahren des Maschinensatzes kann der Generator/Motor 5 im Motorbetrieb selbstständig auf Synchrondrehzahl beschleunigt werden und gleichzeitig, unabhängig davon die Synchronisierwelle 11 durch die Turbine 6 auf dieselbe Drehzahl beschleunigt werden und nachdem sowohl die Generator-/Motorwelle 10 und die Synchronisierwelle 11 die gewünschte Drehzahl, vorzugsweise die Synchrondrehzahl der elektrischen Maschine 5, erreicht hat, kann die Kupplung 13 zur Drehmomentübertragung von Turbine 6 auf Generator 5 eingekuppelt und der Generator/Motor 5 auf Generatorbetrieb umgeschaltet werden. Alternativ könnte der Generator/Motor 5 auch durch die Turbine 6 als Startturbine bei eingekuppelter Kupplung 13 zwischen elektrischer Maschine 5 und Turbine 6 auf Synchrondrehzahl beschleunigt werden. Das Anfahren des Maschinensatzes 4 im Pumpbetrieb erfolgt analog dazu.

Die Steuerung und Automation eines Maschinensatzes einer Speicherkraftanlage ist hinlänglich bekannt und ist auch nicht Gegenstand des Kerns der Erfindung, weshalb hier nicht im Detail darauf eingegangen wird.

Obwohl die Erfindung hier nur anhand einer hydraulischen Speicherkraftanlage 1 beschrieben wird, ist klar, dass die Erfindung auch analog für ein Druckluftspeicherkraftwerk anwendbar ist, wobei anstelle der Pumpe 7 ein Verdichter verwendet wird und die Turbine 6 eine Gasturbine ist.

## Patentansprüche

1. Maschinensatz einer Speicherkraftanlage (1) bestehend aus mehreren durch schaltbare, mechanische Kupplungen (13, 14) miteinander verbundenen Wellen (10,11,12), wobei eine Welle die Welle (10) einer elektrischen Rotationsmaschine (5), vorzugsweise ein Motor bzw. Generator, ist, an einer zweiten Welle (11) eine Kraftmaschine (6), vorzugsweise eine Turbine, und an einer dritten Welle (12) eine Arbeitsmaschine (7), vorzugsweise eine Pumpe oder Pump-Turbine, angeordnet ist, wobei die Welle (10) der elektrischen Rotationsmaschine (5) mit der Welle (11) einer Kraftmaschine (6) durch eine erste schaltbare, mechanische Kupplung (13) miteinander verbunden sind und die Welle (11) einer Kraftmaschine (6) durch eine zweite schaltbare, mechanische Kupplung (14) mit der Welle (12) einer Arbeitsmaschine (7) verbunden ist, **dadurch gekennzeichnet, dass** die Welle (11) der Kraftmaschine (6) als Synchronisierwelle vorgesehen ist, deren Drehzahl durch die darauf angeordnete Kraftmaschine (6) beliebig zwischen Null und der Drehzahl der elektrischen Rotationsmaschine (5) einstellbar ist.

2. Maschinensatz nach Anspruch 1 oder 2, **dadurch gekennzeichnet, dass** das Drehmoment der Synchronisierwelle (11) durch die darauf angeordnete Kraftmaschine (6) beliebig zwischen einem vorgebbaren minimalen Drehmoment, vorzugsweise Null oder darunter, und einem vorgebbaren maximalen Drehmoment einstellbar ist.

3. Verwendung eines Maschinensatzes nach einem der Ansprüche 1 bis 3 für ein Speicherkraftwerk.

4. Verfahren zum Umschalten zwischen unterschiedlichen Betriebsarten eines Maschinensatzes einer Speicherkraftanlage, **dadurch gekennzeichnet, dass** eine Synchronisierwelle (11) mit einer darauf drehfest angeordneten Kraftmaschine (6) auf die Drehzahl einer Welle (10) einer elektrischen Rotationsmaschine (10) oder die Drehzahl einer Welle (12) einer Arbeitsmaschine (7) gebracht wird und anschließend eine mechanische, schaltbare Kupplung (13, 14) zwischen der Welle (10) einer elektrischen Rotationsmaschine (10) und der Synchronisierwelle (11) oder Synchronisierwelle (11) und Welle (12) einer Arbeitsmaschine (7) eingekuppelt wird bzw. einkuppelt.

5. Verfahren nach Anspruch 5, **dadurch gekennzeichnet, dass** die Synchronisierwelle (11) vor dem Kuppeln auf ein bestimmtes Drehmoment eingestellt wird.

## Claims

1. Machine set in a storage power plant (1) consisting of several shafts (10, 11, 12) that are interconnected via engaging and disengaging mechanical couplings (13, 14), where one shaft is the shaft (10) of a rotating electric machine (5), preferably a motor and/or generator, where an engine (6), preferably a turbine, is mounted on a second shaft (11) and a working machine (7), preferably a pump or pump turbine, is mounted on a third shaft (12), where the shaft (10) of the rotating electric machine (5) is connected to the shaft (11) of an engine (6) via a first engaging and disengaging mechanical coupling (13) and the shaft (11) of an engine (6) is connected to the shaft (12) of a working machine (7) via a second engaging and disengaging mechanical coupling (14), **characterized in that** the shaft (11) of the engine (6) is provided as a synchronization shaft whose rotation speed can be adapted to any value between zero and the speed of the rotating electric machine (5) by the engine (6) mounted on the synchronization shaft.

2. Machine set according to Claim 1 or 2, **characterized in that** the torque of the synchronization shaft (11) can be adapted to any value between a pre-settable minimum, preferably zero or below, and a pre-settable maximum value by the engine (6) mounted on the synchronization shaft (11).

3. Use of a machine set according to one of Claims 1 to 3 for a storage power station.

4. Process for switching between different operating modes of a machine set in a storage power plant, **characterized in that** a synchronization shaft (11) is accelerated / decelerated to the speed of a shaft (10) of a rotating electric machine (5) or the speed of a shaft (12) of a working machine (7) by an engine (6) which is fixed on the synchronization shaft (11) and that following this, an engaging and disengaging mechanical coupling (13, 14) is engaged or engages between the shaft (10) of a rotating electric machine (5) and the synchronization shaft (11) or between the synchronization shaft (11) and the shaft (12) of a working machine (7).

5. Process according to Claim 5, **characterized in that** the synchronization shaft (11) is adjusted to a certain torque before engaging and disengaging the coupling.

## Revendications

1. Groupe de machines dans une installation d'accumulation par pompage (1) comprenant plusieurs arbres (10, 11, 12) connectés l'un à l'autre par des accouplements mécaniques embrayables et désembrayables (13, 14), où l'un des arbres est l'arbre (10) d'une machine électrique rotative (5), de préférence d'un moteur et/ou générateur, où une machine de propulsion (6), de préférence une turbine, se trouve montée sur un deuxième arbre (11) et une machine à travail (7), de préférence une pompe ou turbine-pompe, est montée sur un troisième arbre (12), où l'arbre (10) de la machine électrique rotative (5) est connecté à l'arbre (11) d'une machine de propulsion (6) par un premier accouplement embrayable et désembrayable (13) et l'arbre (11) d'une machine de propulsion (6) est connecté à I arbre (12) d'une machine à travail (7) par un deuxième accouplement embrayable et désembrayable (14), **caractérisé en ce que** l'arbre (11) de la machine de propulsion (6) est prévu en tant qu'arbre de synchronisation dont la vitesse de rotation peut être adaptée à toute valeur entre zéro et la vitesse de la machine électrique rotative (5) par la machine de propulsion (6) montée sur l'arbre de synchronisation.

2. Groupe de machines selon la revendication 1 ou 2, **caractérisé en ce que** le couple de l'arbre de synchronisation (11) peut être adapté à un minimum pré-réglable, de préférence à zéro ou moins, et à un maximum pré-réglable, par la machine de propulsion (6) montée sur l'arbre de synchronisation (11).

3. Utilisation d'un groupe de machines selon l'une des revendications 1 à 3 pour une centrale d'accumulation par pompage.

4. Procédé de commutation entre différents modes de fonctionnement d'un groupe de machines dans une installation d'accumulation par pompage, **caractérisé en ce qu'**un arbre de synchronisation (11) est accéléré / décéléré à la vitesse de l'arbre (10) d'une machine électrique rotative (5) ou la vitesse d'un arbre (12) d'une machine à travail (7) par une machine de propulsion (6) fixée sur l'arbre de synchronisation (11) et que par la suite, un accouplement mécanique embrayable ou désembrayable (13, 14) est engagé ou s'engage entre l'arbre (10) d'une machine électrique rotative (5) et l'arbre de synchronisation (11) ou entre l'arbre de synchronisation (11) et l'arbre (12) d'une machine à travail (7).

5. Procédé selon la revendication 5, **caractérisé en ce que** l'arbre de synchronisation (11) est ajusté à un certain couple avant l'engagement ou désengagement de l'accouplement.
